# EUROPÄISCHE PATENTANMELDUNG

(11) **EP 3 901 838 A1**
(43) Veröffentlichungstag der Anmeldung: **27.10.2021**
(21) Anmeldenummer: 21168782.7
(22) Anmeldetag: 16.04.2021
(51) Int. Cl.: G06N 20/00

(54) **SYSTEM ZUM BEREITSTELLEN VON TRAINIERTEN KI-MODELLEN FÜR VERSCHIEDENE ANWENDUNGEN**

(30) Priorität: 20.04.2020 DE 102020204983
(71) Anmelder: VOLKSWAGEN AG, 38440 Wolfsburg (DE)
(72) Erfinder: Kammerlocher, Thomas, 38547 Calberlah (DE); Jaber, Reda, 38226 Salzgitter (DE); Hummel, Nicolas, 38448 Wolfsburg (DE); Simon, Rolf, 38518 Gifhorn (DE); Gupta, Nikhil, 38102 Braunschweig (DE); Möllering, Sören, 38102 Braunschweig (DE); Bunzeck, Carsten, 38448 Wolfsburg (DE); Fischer, Marco, 01219 Dresden (DE)

(57) **Zusammenfassung**

Die Erfindung betrifft ein System (10) zum Bereitstellen von trainierten KI-Modellen (M) für verschiedene Anwendungen (A), aufweisend folgende Komponenten:
ein Verbindungsmodul (1) zum elektrischen und/oder datentechnischen und/oder programmiertechnischen Verbinden von unterschiedlichen Datenquellen (D) an das System (10),
ein Servicemodul (2) zum Bereitstellen passender Treiber für die unterschiedlichen Datenquellen (D),
ein Kennzeichnungsmodul (3) zum Bereitstellen von Eingaben in den Daten (B) der unterschiedlichen Datenquellen (D), um die Neuronen eines KI-Modells (M) zu bilden, und von korrespondierenden Ausgaben, um das KI-Modell (M) zu trainieren,
und ein Trainingsmodul (4) zum Bereitstellen von Trainingsservices zum Anlernen des KI-Modells (M) gemäß den Eingaben und den Ausgaben auf dem Trainingsmodul (4) oder auf einer externen IT-Infrastruktur.

## Beschreibung

Die Erfindung betrifft ein System zum Bereitstellen von trainierten KI-Modellen für verschiedene Anwendungen, wie z. B. Qualitätskontrolle, Vollständigkeitskontrolle, Montagekontrolle, Datenanalyse usw. nach dem unabhängigen Systemanspruch. Zudem betrifft die Erfindung unterschiedliche Verwendungen des erfindungsgemäßen Systems nach den unabhängigen Verwendungsansprüchen sowie ein entsprechendes Verfahren zum Bereitstellen von trainierten KI-Modellen für verschiedene Anwendungen nach dem unabhängigen Verfahrensanspruch.

In vielen Industriebereichen werden Kameras, Tonaufnahmegeräte, Sensoren und/oder Betriebsparametergeber für unterschiedliche Anwendungen genutzt. Die Daten dieser unterschiedlichen Datenquellen werden je nach Anwendung auf eine vielfältige Art und Weise verarbeitet, oft manuell sowie zunehmend automatisiert, z. B. mithilfe von KI-Modellen. All diese Datenquellen erfordern unterschiedliche Verbindungselemente, Verarbeitungsumgebungen, Software und/oder Hardware. Um solche unterschiedlichen Datenquellen einzubinden, werden zunächst spezielle Treiber und weiterhin eine hardwarenahe Kenntnis und Programmierung notwendig. Eine simple Anbindung vom ungeschulten Personal ist somit nicht möglich. Für KI-Modelle gibt es zwar auch verschiedene Frameworks, aber auch diese erfordern Personal mit Fachwissen, insbesondere mit Programmier- und/oder Data-Science-Kenntnissen. Auch dabei ist es für fachfremdes Personal nicht möglich, KI-Modelle eigenständig zu trainieren. Das erhöht Kosten und senkt Flexibilität für unterschiedliche Anwendungen in vielen Industriebereichen.

Die Aufgabe der Erfindung ist daher, eine Plattform bzw. ein System zum Bereitstellen von trainierten KI-Modellen für verschiedene Anwendungen, wie z. B. Qualitätskontrolle, Vollständigkeitskontrolle, Montagekontrolle, Datenanalyse usw., zur Verfügung zu stellen, welche bzw. welches die Kosten für unterschiedliche Anwendungen von KI-Modellen in vielen Industriebereichen reduziert und die Flexibilität erhöht. Insbesondere ist es die Aufgabe der Erfindung, eine Plattform bzw. ein System zum Bereitstellen von trainierten KI-Modellen für verschiedene Anwendungen zur Verfügung zu stellen, welche bzw. welches es auch ungeschultem Personal ermöglicht, unterschiedliche Anwendungen mithilfe von KI-Modellen zu realisieren, individuell zu gestalten, flexibel anzupassen und unkompliziert mit wenig Aufwand zu nutzen. Zudem ist es die Aufgabe der Erfindung, unterschiedliche vorteilhafte Verwendungen des erfindungsgemäßen Systems sowie ein entsprechendes Verfahren zum Bereitstellen von trainierten KI-Modellen für verschiedene Anwendungen zur Verfügung zu stellen.

Die erfindungsgemäße Aufgabe wird durch ein System zum Bereitstellen von trainierten KI-Modellen für verschiedene Anwendungen, wie z. B. Qualitätskontrolle, Vollständigkeitskontrolle, Montagekontrolle, Datenanalyse usw. nach dem unabhängigen Systemanspruch gelöst. Zudem wird die erfindungsgemäße Aufgabe durch unterschiedliche Verwendungen des erfindungsgemäßen Systems nach den unabhängigen Verwendungsansprüchen sowie ein entsprechendes Verfahren zum Bereitstellen von trainierten KI-Modellen für verschiedene Anwendungen nach dem unabhängigen Verfahrensanspruch gelöst. Dabei gelten Merkmale, die im Zusammenhang mit einzelnen Aspekten der Erfindung beschrieben sind, selbstverständlich auch im Zusammenhang mit den anderen Aspekten und jeweils umgekehrt, sodass bezüglich der Offenbarung zu den einzelnen Erfindungsaspekten stets wechselseitig Bezug genommen wird bzw. werden kann.

Die Erfindung stellt ein System zum Bereitstellen von trainierten KI-Modellen für verschiedene Anwendungen bereit, wie z. B. Qualitätskontrolle, Vollständigkeitskontrolle, Montagekontrolle, Datenanalyse usw., aufweisend folgende Komponenten: ein Verbindungsmodul zum elektrischen und/oder datentechnischen und/oder programmiertechnischen Verbinden von unterschiedlichen Datenquellen an das System, ein Servicemodul zum Bereitstellen passender Treiber für die unterschiedlichen Datenquellen, ein Kennzeichnungsmodul zum Bereitstellen von Eingaben in den Daten der unterschiedlichen Datenquellen, um die Neuronen eines KI-Modells zu bilden, und von korrespondierenden Ausgaben, um das KI-Modell zu trainieren (sog. Labeling), und ein Trainingsmodul zum Bereitstellen von Trainingsservices zum Anlernen des KI-Modells gemäß den Eingaben und den Ausgaben auf dem Trainingsmodul oder auf einer externen lT-lnfrastruktur (bspw. in einer Cloud).

Der Erfindungsgedanke liegt dabei darin, dass eine universelle Plattform bzw. ein universelles System geschaffen wird, die für verschiedene Anwendungen viele unterschiedliche KI-Modelle auf eine einfache, flexible sowie intuitive und begleitende Weise zum Auswählen, Anlegen und zum Trainieren zentral und geregelt zur Verfügung stellt. Die erfindungsgemäße Plattform ist vorteilhafterweise sogar vom ungeschulten Personal oder für Laien leicht und verständlich zu bedienen, um neue Anwendungen anzulegen, individuell zu gestalten, flexibel anzupassen, ein passendes KI-Modell dazu auszuwählen, auszuprobieren, erfolgreich zu trainieren und ggf. auszutauschen, bis es fertig für eine kostengünstige, routinemäßige und unkomplizierte Anwendung im entsprechenden Industriebereich ist.

Der Einstiegpunkt zum erfindungsgemäßen System ist das Verbindungsmodul zum elektrischen und/oder datentechnischen und/oder programmiertechnischen Verbinden von unterschiedlichen Datenquellen an das System. Als Datenquelle kann z. B. eine Kamera dienen. Aber auch andere Datenquellen sind denkbar, wie z. B. Tonaufnahmegeräte, Sensoren und/oder Betriebsparametergeber. Die Kamera kann von dem Fachbereich an die dafür vorgesehene Stelle montiert und mit dem Verbindungsmodul verbunden werden, das als der Einstiegspunkt zum erfindungsgemäßen System dient. Das System kann z. B. auf einem Computer, wie bspw. Linux-Computer, bereitgestellt werden. Auf diesem Computer läuft eine korrespondierende Softwarekomponente des Verbindungsmoduls. Die Softwarekomponente des Verbindungsmoduls bietet die Low-Level-Implementierung von diversen Treibern für verschiedene Kameratypen. Das Verbindungsmodul kann neben der Softwarekomponente einen universellen Verbindungsstecker zum mechanischen Anschließen der Kamera aufweisen. Das Verbindungsmodul ist somit die Schnittstelle zwischen der Kamera und dem Rest der Plattform bzw. des Systems. Außerdem stellt das Verbindungsmodul eine standardisierte Programmierschnittstelle für die Kamera bereit. Damit ist es ab dieser Stelle irrelevant, um welche Kamera es sich handelt, da die Schnittstelle für alle Kameras gleich ist.

Die zweite Komponente des erfindungsgemäßen Systems ist das Servicemodul. Das Servicemodul vereint alle Managementkomponenten für unterschiedliche Datenquellen, wie z. B. unterschiedliche Kameras. Das Servicemodul bietet die Funktionalität, verschiedene Kameras zu verwalten, die Live-Streams zu sehen und Parameter an den Kameras einzustellen, wie z. B. Auflösung, Aufnahmewinkel usw. Alle Kameras werden über das Verbindungsmodul mit dem Servicemodul verbunden. Damit steht die Funktionalität zur Verfügung und die Kameras können in verschiedenen Business-Applikationen genutzt werden. Außerdem können mithilfe von Kameras Bilder für das Training der KI-Modelle aufgenommen werden. Diese werden automatisiert von dem Servicemodul abgespeichert. Hierzu kann das Servicemodul eine Speichereinheit aufweisen. Es ist auch mithilfe des Servicemoduls möglich, die Aufnahmen mit Hilfe eines Intervalls zu starten, z. B. mit einem Befehl "Zeichne Bilder für die nächsten zwei Wochen in einem Intervall von 10 Sekunden auf". Diese Bilder werden dann für das KI-Modell-Training genutzt.

Die dritte Komponente des erfindungsgemäßen Systems ist das Kennzeichnungsmodul. Um ein KI-Modell trainieren zu können, müssen die Bilder gelabelt oder mit anderen Worten annotiert werden. Dies bedeutet, dass bestimmte Eingaben in den Daten der unterschiedlichen Datenquellen ausgewählt werden müssen, um die Neuronen eines KI-Modells zu bilden. Zudem müssen korrespondierende Ausgaben zu den Eingaben angegeben werden, um das KI-Modell zu trainieren. Die Eingaben und die korrespondierenden Ausgaben können bspw. manuell für jedes Bild vorgenommen werden. Im Beispiel einer Prüfung von Sequenzkörben oder LKW-Ladungen auf Vollständigkeit können die Eingaben bspw. einzeichnen, wo sich in einem zu untersuchenden Bild welches Objekt befindet. Die Ausgabe dazu kann bspw. sein, ob ein Sequenzkorb oder eine LKW-Ladung komplett ist oder nicht. Im Beispiel einer Gesichtserkennung können die Eingaben bspw. den Augenabstand, die Nasenlänge usw. angeben. Die Ausgabe dazu können bspw. sein, ob es sich bei der Person um eine Frau oder ein Mann handelt. Vorteilhafterweise können die KI-Modelle mithilfe von Überwachtes-Lernen-Verfahren trainiert werden. Das Kennzeichnungsmodul bietet vorteilhafterweise die Funktionalität, um die Überwachtes-Lernen-Verfahren in einer Weboberfläche auszuführen. Mithilfe des Kennzeichnungsmoduls können Projekte angelegt werden, aus welchen wiederum KI-Modelle erzeugt werden können. Für ein Projekt kann bspw. angegeben werden, welche Objektklassen notwendig sind. Bilder für ein Projekt können wiederum aus unterschiedlichen Quellen kommen (dem Servicemodul, aus anderen Projekten oder neu hochgeladene Bilder). Sofern schon trainierte KI-Modelle aus anderen Projekten vorliegen, können diese auch genutzt werden, um Labels für neue Bilder vorzuschlagen. Dabei analysiert das bereits trainierte Modell das dazugehörige Bild und markiert alle gefundenen und gewünschten Objekte, es tätigt also die Eingaben. Wenn ein KI-Modell trainiert werden soll, wird das nächste Trainingsmodul angestoßen. Mithilfe des Kennzeichnungsmoduls und/oder des Trainingsmoduls kann außerdem bspw. ausgewählt werden, wie lange ein KI-Modell trainiert werden soll. In dem Kennzeichnungsmodul kann man außerdem auf eine vorteilhafte Weise den Status und/oder den aktuellen Fortschritt des Trainings verfolgen. Das Kennzeichnungsmodul exportiert die Daten automatisch in ein für das Training notwendiges Format und übergibt diese an das Trainingsmodul, damit das Trainingsmodul das Training starten kann.

Die vierte Komponente des erfindungsgemäßen Systems ist das Trainingsmodul. Mit den exportierten Daten aus dem Kennzeichnungsmodul ist es möglich, ein Training zu starten. Dabei können unterschiedliche Trainingsprozeduren verwendet werden, die austauschbar oder frei wählbar sind. Das Trainingsmodul ist dafür zuständig, alles notwendige für das Training vorzubereiten. Das eigentliche Training kann dann in einem separaten Docker-Container oder direkt auf dem Trainingsmodul ablaufen. Wenn ein separater Docker-Container verwendet wird, kann er nach Bedarf hochgefahren und auch wieder gestoppt werden. Beim Starten mountet (bzw. lädt hoch) das Trainingsmodul alle notwendigen Metadaten in den Docker-Container und stößt damit das Training an. Der Docker-Container lädt automatisiert alle Zwischenstände hoch und sobald dieser fertig ist, fährt er sich selbst wieder runter. Nach Beendigung des Trainings, kann das Trainingsmodul das fertige bzw. fertig trainierte KI-Modell in eine fünfte vorteilhafte Komponente des erfindungsgemäßen Systems hochladen, nämlich eine Datenbank.

Die fünfte Komponente des erfindungsgemäßen Systems kann folglich eine Datenbank sein. Die Datenbank kann alle Managementkomponenten aller vorhandenen KI-Modelle vereinen. In der Datenbank können alle notwendigen Metadaten der KI-Modelle persistiert werden. Diese Metadaten können wiederum als Grundlage für ein Referenzmodul bilden, damit das Referenzmodul die trainierten KI-Modelle ausführen kann. Die Datenbank kann ferner eine Versionierung für die trainierten KI-Modelle vornehmen. Wenn z. B. ein bereits trainiertes KI-Modell aktualisiert wird, z. B. durch das Trainingsmodul, wird die Version inkrementiert.

Die sechste Komponente des erfindungsgemäßen Systems kann ferner ein Referenzmodul sein. Das Referenzmodul kann für die Ausführung der trainierten KI-Modelle zuständig sein. Die Metadaten werden von dem Kennzeichnungsmodul und/oder von der Datenbank bereitgestellt. Die trainierten KI-Modelle werden in unterschiedlichen Laufzeitumgebungen entwickelt, die jedoch austauschbar sind. Da die Laufzeitumgebungen austauschbar sind und unterschiedliche Programmierschnittstellen aufweisen können, kann das Referenzmodul vorteilhafterweise eine Abstraktionsschicht für die unterschiedlichen Laufzeitumgebungen bilden. Das heißt, dass alle KI-Modelle unabhängig von der Architektur oder dem Typ, über die gleiche Programmierschnittstelle des Referenzmoduls ansprechbar sein können. Die Benutzer der Plattform müssen sich nicht darum kümmern, ob und wie das KI-Modell entwickelt und angesprochen wird. Durch das Referenzmodul kann das KI-Modell getestet und ausgeführt werden. Wenn der Benutzer merkt, dass das Modell nicht die benötigte Genauigkeit aufweist, können zusätzlich mehr Bilder aufgezeichnet und gelabelt werden, um das gleiche KI-Modell neu zu trainieren. Das neu trainierte Modell kann anschließend als eine neue Version in der Datenbank abgespeichert werden.

Alle oben beschriebenen Komponenten bieten standardisierte Schnittstellen an, wodurch sie für verschiedene Anwendungen in unterschiedlichen Betrieben nutzbar sind. Die Erfindung ermöglicht vorteilhafterweise einen kompletten Dienst vom Anschließen der Kamera bis zur fertiger KI-Modell-Anwendung. Die Erfindung ermöglicht es fachfremdem Personal, KI-Modelle für spezielle Anwendungen selbständig zu trainieren und zu benutzen. Die Nutzer der Plattform müssen sich nicht selbständig darum kümmern, wie die Daten verarbeitet und in die richtige Struktur gebracht werden, damit das Training durchgeführt werden kann. Die Einbindung von Datenquellen und/oder KI-Modellen wird mithilfe der Erfindung komplett abstrahiert und somit auch für jeden zugänglich gemacht.

Ferner kann die Erfindung bei einem System vorsehen, dass das Verbindungsmodul eine standardisierte Programmierschnittstelle für die unterschiedlichen Datenquellen aufweist. Zudem kann die Erfindung bei einem System vorsehen, dass das Verbindungsmodul einen standardisierten Stecker für die unterschiedlichen Datenquellen aufweist. Auf diese Weise kann das Verbindungsmodul vorteilhafterweise dazu dienen, unterschiedliche Kameras, Tonaufnahmegeräte, Sensoren und/oder Betriebsparametergeber als die unterschiedlichen Datenquellen an das System anzubinden. Folglich kann das erfindungsgemäße System flexibel mit unterschiedlichen Datenquellen genutzt werden.

Weiterhin kann die Erfindung bei einem System vorsehen, dass das Servicemodul eine Bedieneinheit aufweist, um die unterschiedlichen Datenquellen anzusteuern und/oder Parameter, wie z. B. Helligkeit, Bildgröße, Auflösung, Timer usw., an den unterschiedlichen Datenquellen einzustellen. Damit kann die Ansteuerung der unterschiedlichen Datenquellen zentral ausgeführt und vereinfacht werden.

Des Weiteren kann das Servicemodul eine Datenverarbeitungseinheit (Prozessor) aufweisen, um die Daten der unterschiedlichen Datenquellen zentral zu bearbeiten, für das Training von KI-Modellen zu nutzen und/oder mithilfe von trainierten KI-Modellen zu verarbeiten. Zudem kann das Servicemodul eine Speichereinheit aufweisen, um die Daten der unterschiedlichen Datenquellen zu speichern und zu verwalten. Außerdem kann die Erfindung bei einem System vorsehen, dass das Servicemodul eine Anzeigeeinheit aufweist, um die unterschiedlichen Datenquellen zu verwalten und/oder die Daten der unterschiedlichen Datenquellen in Live-Streams anzuzeigen. Mit anderen Worten kann somit mithilfe des Servicemoduls ein Computer bereitgestellt werden, welcher zum Trainieren von KI-Modellen genutzt wird und welcher sämtliche Komponenten des erfindungsgemäßen Systems abbilden kann.

Ferner kann die Erfindung bei einem System vorsehen, dass das Servicemodul mehrere Anwendungsschnittstellen, bspw. in Form von Apps aufweist, um die verschiedenen Anwendungen an einen Benutzer bereitzustellen. Auf diese Weise kann die Erfindung eine vereinfachte Nutzung des Systems für verschiedene Anwendungen ermöglichen.

Nach einem weiteren Vorteil kann das Servicemodul ein Erkennungstool für Personen aufweisen, um die Personen in Daten der unterschiedlichen Datenquellen zu anonymisieren. Auf diese Weise kann der Datenschutz beim Nutzen des erfindungsgemäßen Systems gewährleistet werden.

Weiterhin kann die Erfindung bei einem System vorsehen, dass das Servicemodul, insbesondere die Bedieneinheit und/oder die Anzeigeeinheit, ein Protokollierungs- und/oder Überwachungstool für die Bedienbefehle eines Benutzers und/oder ein Authentifizierungs- und/oder Autorisierungstool für die Authentifizierung und/oder Autorisierung eines Benutzers und/oder ein Portaltool für die Weiterleitung der Bedienbefehle eines Benutzers an einen entsprechenden Dienst des Systems aufweist. Auf diese Weise kann eine geregelte, autorisierte sowie gezielte Nutzung des Systems ermöglicht werden.

Des Weitern kann die Erfindung bei einem System vorsehen, dass das Servicemodul, insbesondere die Bedieneinheit und/oder die Anzeigeeinheit, eine Eingabeschnittstelle aufweist, um ein Intervall einzustellen, in welchem die unterschiedlichen Datenquellen die Daten erfasst werden können. Auf diese Weise kann eine automatisierte Vorbereitung der Daten erfolgen, die für das Training von KI-Modelle verwendet werden.

Zudem kann die Erfindung bei einem System vorsehen, dass das Kennzeichnungsmodul dazu ausgeführt ist, die Eingaben in den Daten der unterschiedlichen Datenquellen, um die Neuronen eines KI-Modells zu bilden, und die korrespondierenden Ausgaben bereitzustellen, um das KI-Modell nach einem Überwachtes-Lernen-Verfahren zu trainieren. Mithilfe von Überwachtes-Lernen-Verfahren können mithilfe des erfindungsgemäßen Systems individuell gestaltete Anwendungen zur Verfügung gestellt werden.

Außerdem kann die Erfindung bei einem System vorsehen, dass das Kennzeichnungsmodul eine Weboberfläche aufweist, um die Eingaben und die korrespondierenden Ausgaben in den Daten der unterschiedlichen Datenquellen manuell durch einen Benutzer und/oder automatisch durch ein bereits durch das System trainiertes KI-Modell bereitzustellen. Die Weboberfläche kann vorteilhafterweise eine grafische Benutzeroberfläche, über die ein Benutzer mit Hilfe eines Webbrowsers mit dem erfindungsgemäßen System interagieren kann, oder einen Webservice zur Verfügung stellen, durch den das System anderen Systemen Daten oder Funktionen zur Verfügung stellten kann.

Ferner kann die Erfindung bei einem System vorsehen, dass das Kennzeichnungsmodul, insbesondere die Weboberfläche, eine grafische Benutzeroberfläche aufweist, um einem Benutzer mit Hilfe eines Webbrowsers eine Eingabemöglichkeit für die Eingaben und die korrespondierenden Ausgaben in den Daten der unterschiedlichen Datenquellen zur Verfügung zu stellen, und/oder das Kennzeichnungsmodul, insbesondere die Weboberfläche, ein Webservicetool aufweist, um einem bereits durch das System trainierten KI-Modell eine Eingabemöglichkeit für die Eingaben und die korrespondierenden Ausgaben in den Daten der unterschiedlichen Datenquellen zur Verfügung zu stellen. Auf diese Weise kann das Labeling bzw. das Kennzeichnen von Bildern manuell erfolgen und/oder wahlweise unterstützt oder automatisch durch bereits vorhandene trainierte KI-Modelle, um insbesondere die Eingaben in den Daten der unterschiedlichen Datenquellen bereitzustellen.

Weiterhin kann die Erfindung bei einem System vorsehen, dass das Kennzeichnungsmodul, insbesondere die grafische Benutzeroberfläche, mit einer Bedieneinheit und/oder einer Anzeigeeinheit verbunden ist, um Projekte für verschiedene Anwendungen anzulegen und/oder zu verwalten und/oder korrespondierende Anwendungsschnittstellen anzuzeigen. Somit kann eine vielfältige, überschaubare und intuitive Nutzung des erfindungsgemäßen Systems für unterschiedlich Projekte ermöglicht werden, die zu fertigen Anwendungen führen können. Zudem ist es im Rahmen der Erfindung denkbar, dass Kennzeichnungsmodul, insbesondere die grafische Benutzeroberfläche, mit einer Bedieneinheit und/oder einer Anzeigeeinheit verbunden sein kann, um einen Status und/oder einen aktuellen Fortschritt eines Trainings anzuzeigen und/oder eine Dauer und/oder einen Startpunkt des Trainings durch einen Benutzer eingeben zu können. Auf diese Weise kann der Benutzer nachvollziehen, seit wann und/oder wie weit und/oder wie gut das Training läuft.

Außerdem kann die Erfindung bei einem System vorsehen, dass das Trainingsmodul dazu ausgeführt ist, eine Datenverbindung mit einem Docker-Container herzustellen, der im Trainingsmodul oder auf der externen lT-lnfrastruktur installiert ist, und/oder ein Training zu starten und/oder nach Beendigung des Trainings ein trainiertes KI-Modell in eine Datenbank hochzuladen. Der Docker-Container kann zur Isolierung von Anwendungen mit Containervirtualisierung dienen.

Des Weiteren kann im Rahmen der Erfindung bei einem System vorgesehen sein, dass die Datenbank die Metadaten für die KI- Modelle, umfassend die Eingaben und die korrespondierenden Ausgaben in den Daten der unterschiedlichen Datenquellen, speichert und/oder an das Referenzmodul bereitstellt, damit das Referenzmodul die Metadaten als Referenzdaten für die KI-Modelle nutzen kann. Auf diese Weise kann die funktionale Verbindung zwischen der Datenbank und dem Referenzmodul geschaffen werden.

Ferner kann die Erfindung bei einem System vorsehen, dass die Datenbank die trainierten KI-Modelle versioniert und/oder aktualisiert. Auf diese Weise kann ein lernendes dynamisches System bereitgestellt werden.

Vorteilhafterweise kann die Datenbank mit einer Bedieneinheit und/oder einer Anzeigeeinheit verbunden sein, um die trainierten KI-Modelle anzuzeigen und/oder neue KI-Modelle anzulegen. Mit anderen Worten kann die Datenbank in einem Computer hinterlegt sein, welcher das erfindungsgemäße System abbildet und mit entsprechender Bedieneinheit und/oder Anzeigeeinheit des Computers genutzt werden.

Weiterhin kann die Erfindung bei einem System vorsehen, dass das Referenzmodul eine Abstraktionsschicht aufweist, um die KI-Modelle in unterschiedlichen Laufzeitumgebungen zu entwickeln, zu testen und/oder auszuführen. Somit kann das erfindungsgemäße System flexibel mit unterschiedlichen Laufzeitumgebungen genutzt werden. Als Laufzeitumgebungen im Sinne der Erfindung können verschiedene containerbasierte Dienste verstanden werden. Die Laufzeitumgebungen können über die Abstraktionsschicht erreicht werden, um verschiedene Modelle, wie z. B. Modelle zur Objekterkennung oder Anomalieerkennung, nutzen zu können. Des Weitern kann die Erfindung bei einem System vorsehen, dass das Referenzmodul mit einer Bedieneinheit und/oder einer Anzeigeeinheit verbunden ist, um die KI-Modelle auszuwählen, zu testen, zu wechseln, zu löschen und/oder neue Versionen der KI-Modelle auszuwählen und/oder abzuspeichern. Auf diese Weise kann die Nutzung der KI-Modelle einfach und intuitiv gestaltet werden.

Vorteilhaftere Verwendungen des erfindungsgemäßen Systems können im Rahmen der Erfindung zumindest die folgenden Beispiele sein: für eine Qualitätskontrolle von Erzeugnissen, wie z. B. für eine Porösitätskontrolle von Reifen, eine Lackfehlererkennung, eine Kontrolle von 3D-Druckerzeugnissen usw., für eine Vollständigkeitskontrolle, z. B. von Sequenzkörben, LKW-Ladungen usw., für eine Montagekontrolle, z. B. für die Kontrolle einer richtigen Montageposition, einer Verbindungsstelle, relativer Montagepositionen mehrerer Bauteile usw., und/oder für eine Datenanalyse, z. B. zum Auswerten von Röntgenbildern, Audiobändern, Kamera-Bildern usw.

Gemäß einem weiteren Aspekt der Erfindung stellt die Erfindung ein Verfahren zum Bereitstellen von trainierten KI-Modellen für verschiedene Anwendungen bereit, wie z. B. Qualitätskontrolle, Vollständigkeitskontrolle, Montagekontrolle, Datenanalyse usw., aufweisend folgende Schritte:
- Bereitstellen eines universellen Verbindungsmoduls zum elektrischen und/oder datentechnischen und/oder programmiertechnischen Verbinden von unterschiedlichen Datenquellen an das System,
- Bereitstellen eines zentralen Servicemoduls zum Bereitstellen passender Treiber für die unterschiedlichen Datenquellen,
- Bereitstellen eines Kennzeichnungsmoduls zum Bereitstellen von Eingaben in den Daten der unterschiedlichen Datenquellen, um die Neuronen eines KI-Modells zu bilden, und von korrespondierenden Ausgaben, um das KI-Modell zu trainieren,
- Bereitstellen eines Trainingsmoduls zum Bereitstellen von Trainingsservices zum Anlernen des KI-Modells gemäß den Eingaben und den Ausgaben auf dem Trainingsmodul oder auf einer externen IT-Infrastruktur.

Weiterhin kann das Verfahren mindestens einen weiteren von den folgenden Schritten aufweisen:
- Bereitstellen einer Datenbank zum Verwalten und/oder zum Bereitstellen von trainierten KI-Modellen und/oder
- Bereitstellen eines Referenzmoduls zum Ausführen von trainierten KI-Modellen und/oder Bereitstellen der verschiedenen Anwendungen mithilfe von trainierten KI-Modellen.

Die Schritte des erfindungsgemäßen Verfahrens können in der vorgegebenen oder in einer abgeänderten Reihenfolge durchgeführt werden. Vorteilhafterweise können die Schritte des erfindungsgemäßen Verfahrens simultan und/oder wiederholend durchgeführt werden, um einen fließenden Prozess zu ermöglichen.

Vorteilhafterweise kann das erfindungsgemäße Verfahren speziell zum Betreiben des erfindungsgemäßen Systems dienen. Mithilfe des erfindungsgemäßen Verfahrens können die gleichen Vorteile erreicht werden wie mit dem erfindungsgemäßen System. Auf diese Vorteile wird vorliegend vollumfänglich Bezug genommen.

Weiterhin wird die Erfindung anhand der Figuren näher dargestellt. Dabei ist zu beachten, dass die Figuren nur einen beschreibenden Charakter haben und nicht dazu gedacht sind, die Erfindung in irgendeiner Form einzuschränken. Es zeigen:
- Fig. 1: eine beispielhafte Darstellung eines Systems im Sinne der Erfindung,
- Fig. 2: eine beispielhafte Visualisierung eines Verfahrens im Sinne der Erfindung,
- Fig. 3: eine beispielhafte Umgebung zum Nutzen eines Systems im Sinne der Erfindung,
- Fig. 4: eine beispielhafte Weboberfläche zum Nutzen eines Systems im Sinne der Erfindung.

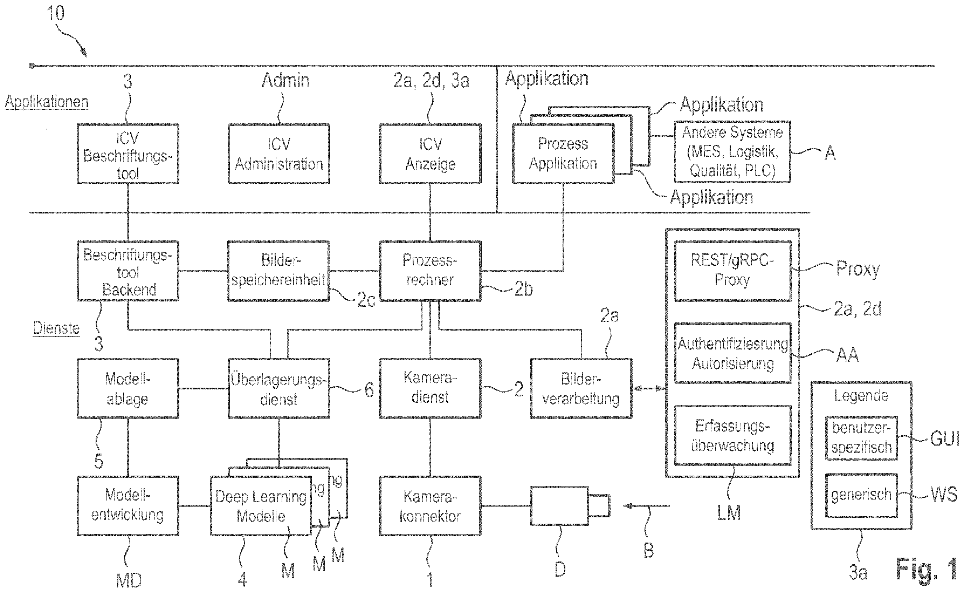

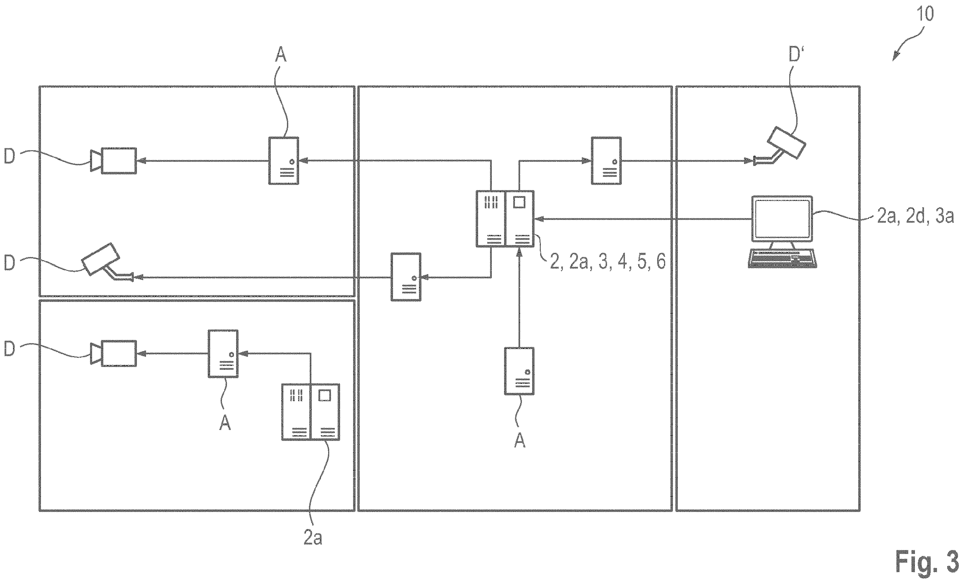

Die Figur 1 dient zur Veranschaulichung eines erfindungsgemäßen Systems 10 zum Bereitstellen von trainierten KI-Modellen M für verschiedene Anwendungen A (vgl. die Figur 3), wie z. B. Qualitätskontrolle, Vollständigkeitskontrolle, Montagekontrolle, Datenanalyse usw. Das System 10 weist dabei folgende Komponenten auf:
- ein Verbindungsmodul 1 zum elektrischen und/oder datentechnischen und/oder programmiertechnischen Verbinden von unterschiedlichen Datenquellen D, wie z. B. Kameras, Tonaufnahmegeräte, Sensoren und/oder Betriebsparametergeber, an das System 10,
- ein Servicemodul 2 zum Bereitstellen passender Treiber für die unterschiedlichen Datenquellen D,
- ein Kennzeichnungsmodul 3 zum Bereitstellen von Eingaben in den Daten B der unterschiedlichen Datenquellen D, um die Neuronen eines KI-Modells M zu bilden, und von korrespondierenden Ausgaben, um das KI-Modell M entsprechend zu trainieren, und
- ein Trainingsmodul 4 zum Bereitstellen von Trainingsservices zum Anlernen des KI-Modells M gemäß den Eingaben und den Ausgaben auf dem Trainingsmodul 4 oder auf einer externen lT-lnfrastruktur (bspw. in einer Cloud).

Ferner kann das System 10 folgende Komponenten (diese Komponenten können nach Bedarf ausgelagert werden) aufweisen:
- eine Datenbank 5 zum Verwalten und/oder zum Bereitstellen von trainierten KI-Modellen M, die bspw. an eine Cloud ausgelagert werden kann,
- ein Referenzmodul 6 zum Ausführen von trainierten KI-Modellen M und/oder Bereitstellen der verschiedenen Anwendungen A mithilfe von trainierten KI-Modellen M vorgesehen ist, welches auf einem zentralen Computer des Systems 10 (ggf. mit einer Weboberfläche 3a, bspw. in Form einer grafischen Benutzeroberfläche GUI, die mit der Bedieneinheit 2a und/oder der Anzeigeeinheit 2d verbunden sein kann) und/oder auf einem Benutzercomputer realisiert werden kann .

Mithilfe der Erfindung wird eine universelle Plattform bzw. ein universelles System 10 geschaffen, die für verschiedene Anwendungen A viele unterschiedliche KI-Modelle M auf eine einfache, flexible und intuitive bereitstellt, die mithilfe des Systems 10 ausgewählt, angelegt und trainiert werden können.

Ein wesentlicher Vorteil der Erfindung liegt darin, dass das erfindungsgemäße System 10 vom ungeschulten Personal leicht und verständlich genutzt werden kann, um neue Anwendungen A anzulegen, individuell zu gestalten, flexibel anzupassen, ein passendes KI-Modell M dazu auszuwählen, auszuprobieren, erfolgreich zu trainieren und ggf. auszutauschen, bis es fertig für eine kostengünstige, routinemäßige und unkomplizierte Anwendung A im entsprechenden Industriebereich ist (vgl. bspw. die Figur 3).

Wie es aus der Figur 1 ersichtlich ist, bildet das Verbindungsmodul 1 den Einstiegpunkt zum erfindungsgemäßen System 10. Als Datenquelle D kann bspw. eine Kamera dienen, wie es die Figuren 1 und 3 andeuten. Aber auch andere Datenquellen D sind denkbar, wie z. B. Tonaufnahmegeräte, Sensoren und/oder Betriebsparametergeber. Die Kamera kann von dem Fachbereich an die dafür vorgesehene Stelle montiert werden, wie es die Figur 3 schematisch andeutet, Anschließend kann die Kamera mit dem Verbindungsmodul 1 verbunden werden. Das System 10 kann z. B. auf einem Computer bereitgestellt werden, wie es in der Figur 3 schematisch gezeigt ist. Auf diesem Computer läuft eine korrespondierende Softwarekomponente des Verbindungsmoduls 1. Die Softwarekomponente des Verbindungsmoduls 1 umfasse diverse Treiber für verschiedene Kameratypen. Das Verbindungsmodul 1 kann zudem einen universellen mechanische Verbindungsstecker für verschiedene Kameratypen aufweisen. Das Verbindungsmodul 1 kann somit die mechanische, datentechnische und/oder programmiertechnische Schnittstelle zwischen der Kamera und dem Rest des Systems 10 bilden. Das Verbindungsmodul 1 weist vorteilhafterweise eine standardisierte Programmierschnittstelle für verschiedene Kameratypen.

Die zweite Komponente des erfindungsgemäßen Systems 10 ist das Servicemodul 2. Das Servicemodul 2 vereint alle Managementkomponenten für unterschiedliche Datenquellen D, wie z. B. unterschiedliche Kameras. Das Servicemodul 2 bietet die Funktionalität, verschiedene Kameras zu verwalten, die Live-Streams (bspw. auf einer Anzeigeeinheit 2d) zu sehen und Parameter an den Kameras (bspw. mithilfe einer Bedieneinheit 2a) einzustellen, wie z. B. Auflösung, Aufnahmewinkel usw. Alle Kameras werden über das Verbindungsmodul 1 mit dem Servicemodul 2 verbunden. Mithilfe von Kameras weder Daten B in Form von Bildern für das Training der KI-Modelle M gesammelt. Die Daten B werden automatisiert von dem Servicemodul 2 (bspw. mithilfe einer Speichereinheit 2c) abgespeichert. Es ist auch mithilfe des Servicemoduls 2 (bspw. mithilfe einer Bedieneinheit 2a) möglich, die Aufnahmen mit Hilfe eines Intervalls zu starten, z. B. mit einem Befehl "Zeichne Bilder für die nächsten zwei Wochen in einem Intervall von 10 Sekunden auf. Diese Bilder werden dann für das KI-Modell-Training genutzt.

Wie es die Figur 1 veranschaulicht, kann das Servicemodul 2 folgende Einheiten aufweisen:
- eine Bedieneinheit 2a, um die unterschiedlichen Datenquellen D anzusteuern und/oder Parameter an den unterschiedlichen Datenquellen D einzustellen,
- eine Datenverarbeitungseinheit 2b, um die Daten B der unterschiedlichen Datenquellen D zentral zu bearbeiten, für das Training von KI-Modellen M zu nutzen und/oder mithilfe von trainierten KI-Modellen M zu verarbeiten, und
- eine Speichereinheit 2c, um die Daten B der unterschiedlichen Datenquellen D zu speichern und zu verwalten.

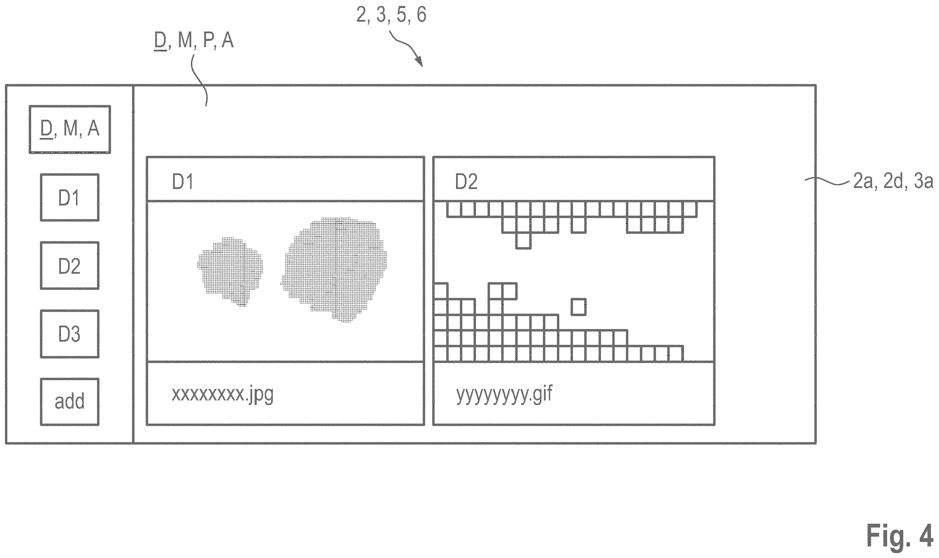

Ferner kann das Servicemodul 2 folgende Einheit aufweisen:
- eine Anzeigeeinheit 2d, um die unterschiedlichen Datenquellen D zu verwalten und/oder die Daten B der unterschiedlichen Datenquellen D in Live-Streams anzuzeigen (vgl. die Figur 4).

Wie es zudem die Figur 1 zeigt kann das Servicemodul 2 mehrere Anwendungsschnittstellen App auf entfernten Edge-Vorrichtungen bzw. Edge-Computern aufweisen, um die verschiedenen Anwendungen A an einen Benutzer bereitzustellen (vgl. die Figur 3).

Vorteilhafterweise kann das Servicemodul 2 ein (aus Einfachheitsgründen nicht gezeigtes) Erkennungstool für Personen aufweisen, um die Personen in Daten B der unterschiedlichen Datenquellen unkenntlich zu machen.

Wie es außerdem die Figur 1 andeutet, kann das Servicemodul 2, oder genauer gesagt die Bedieneinheit 2a und/oder die Anzeigeeinheit 2d, ein Protokollierungs- und/oder Überwachungstool LM für die Bedienbefehle eines Benutzers und/oder ein Authentifizierungs- und/oder Autorisierungstool AA für die Authentifizierung und/oder Autorisierung eines Benutzers und/oder ein Portaltool Proxy für die Weiterleitung der Bedienbefehle eines Benutzers an einen entsprechenden Dienst des Systems 10 aufweisen.

Zudem kann das Servicemodul 2, bspw. an der Bedieneinheit 2a und/oder an der Anzeigeeinheit 2d, eine (aus Einfachheitsgründen nicht gezeigte) Eingabeschnittstelle aufweisen, um ein Intervall einzustellen, in welchem die unterschiedlichen Datenquellen D die Daten B erfasst werden können.

Die dritte Komponente des erfindungsgemäßen Systems 10 ist das Kennzeichnungsmodul 3. Um ein KI-Modell M trainieren zu können, müssen die Bilder gelabelt oder mit anderen Worten annotiert werden. D. h., dass in den Daten B der unterschiedlichen Datenquellen D bestimmte Eingaben ausgewählt werden müssen, um die Neuronen eines KI-Modells M zu bilden. Zudem müssen korrespondierende Ausgaben zu den Eingaben angegeben werden, um das KI-Modell M zu trainieren. Die Eingaben und die korrespondierende Ausgaben können bspw. manuell für jedes Bild vorgenommen werden (bspw. mithilfe einer Weboberfläche 3a, die bspw. auf einer Anzeigeeinheit 2d angezeigt werden kann).

Im Beispiel einer Prüfung von Sequenzkörben oder LKW-Ladungen auf Vollständigkeit können die Eingaben bspw. einzeichnen, wo sich in einem zu untersuchenden Bild welches Objekt befindet. Die Ausgabe dazu kann bspw. sein, ob ein Sequenzkorb oder eine LKW-Ladung komplett ist oder nicht.

Im Beispiel einer Gesichtserkennung können die Eingaben bspw. den Augenabstand, die Nasenlänge usw. angeben. Die Ausgabe dazu können bspw. sein, ob es sich bei der Person um eine Frau oder ein Mann handelt. Vorteilhafterweise können die KI-Modelle mithilfe von Überwachtes-Lernen-Verfahren trainiert werden.

Das Kennzeichnungsmodul 3 bietet somit die Funktionalität, um die Überwachtes-Lernen-Verfahren in einer Weboberfläche 3a auszuführen.

Mithilfe des Kennzeichnungsmoduls 3 (bspw. mithilfe einer grafischen Benutzeroberfläche GUI, die mit der Bedieneinheit 2a und/oder der Anzeigeeinheit 2d verbunden sein kann) können Projekte P angelegt werden. Aus den Projekten P können KI-Modelle M folgen. Sofern schon trainierte KI-Modelle M aus anderen Projekten P vorliegen, können diese auch genutzt werden, um Labels für neue Bilder vorzuschlagen.

Wenn ein KI-Modell M trainiert werden soll, wird das nächste Trainingsmodul 4 angestoßen. Mithilfe des Kennzeichnungsmoduls 3 und/oder des Trainingsmoduls 4, die mit der Bedieneinheit 2a und/oder der Anzeigeeinheit 2d verbunden sein können, kann außerdem bspw. ausgewählt werden, wie lange ein KI-Modell M trainiert werden soll.

In dem Kennzeichnungsmodul 3 kann man bspw. mithilfe der grafischen Benutzeroberfläche GUI, die mit der Bedieneinheit 2a und/oder der Anzeigeeinheit 2d verbunden sein kann, den Status und/oder den aktuellen Fortschritt des Trainings verfolgen.

Das Kennzeichnungsmodul 3 exportiert die Daten B automatisch in ein für das Training notwendiges Format und übergibt diese an das Trainingsmodul 4, damit das Trainingsmodul 4 das Training starten kann.

Das Kennzeichnungsmodul 3 kann vorteilhafterweise dazu ausgeführt sein, die Eingaben und die Ausgaben in den Daten B der unterschiedlichen Datenquellen D derart bereitzustellen, dass das KI-Modell M nach einem Überwachtes-Lernen-Verfahren trainieren kann.

Wie zuvor bereits erwähnt und wie es die Figur 1 schematische andeutet, kann das Kennzeichnungsmodul 3 eine Weboberfläche 3a aufweisen, um die Eingaben und die korrespondierenden Ausgaben in den Daten B der unterschiedlichen Datenquellen D manuell durch einen Benutzer und/oder automatisch durch ein bereits durch das System 10 trainiertes KI-Modell M bereitzustellen. Die Weboberfläche 3a kann wiederum eine grafische Benutzeroberfläche GUI aufweisen, um einem Benutzer mit Hilfe eines Webbrowsers eine Eingabemöglichkeit für die Eingaben und die korrespondierenden Ausgaben in den Daten B der unterschiedlichen Datenquellen D zur Verfügung zu stellen, sowie ein Webservicetool WS, um einem bereits durch das System 10 trainierten KI-Modell eine Eingabemöglichkeit für die Eingaben und die korrespondierenden Ausgaben in den Daten B der unterschiedlichen Datenquellen D zur Verfügung zu stellen.

Die grafische Benutzeroberfläche GUI kann bspw. mit der Bedieneinheit 2a und/oder der Anzeigeeinheit 2d verbunden sein, um Projekte P für verschiedene Anwendungen A anzulegen und/oder zu verwalten und/oder korrespondierende Anwendungsschnittstellen App anzuzeigen, und/oder um einen Status und/oder einen aktuellen Fortschritt eines Trainings anzuzeigen und/oder eine Dauer und/oder einen Startpunkt des Trainings durch einen Benutzer eingeben zu können (vgl. die Figur 4).

Die vierte Komponente des erfindungsgemäßen Systems 10 ist das Trainingsmodul 4. Mit den exportierten Daten B aus dem Kennzeichnungsmodul 3 ist es möglich, ein Training zu starten. Dabei können unterschiedliche Trainingsprozeduren flexibel verwendet werden. Das Trainingsmodul 4 kann dazu dienen, alles notwendige für das Training vorzubereiten. Das eigentliche Training kann dann in einem separaten Docker-Container erfolgen. Der Docker-Container kann nach Bedarf hochgefahren und auch wieder gestoppt werden. Beim Starten mountet das Trainingsmodul 4 alle notwendigen Metadaten in den Docker-Container und stößt damit das Training an. Der Docker-Container lädt automatisiert alle Zwischenstände hoch und sobald dieser fertig ist, fährt er sich selbst wieder runter. Nach Beendigung des Trainings, kann das Trainingsmodul 4 das fertige bzw. fertig trainierte KI-Modell in eine fünfte vorteilhafte Komponente des erfindungsgemäßen Systems 10 hochladen, nämlich eine Datenbank 5.

Die fünfte Komponente des erfindungsgemäßen Systems 10 kann folglich eine Datenbank 5 sein. Die Datenbank 5 kann alle Managementkomponenten aller vorhandenen KI-Modelle M umfassen. In der Datenbank 5 können alle notwendigen Metadaten der KI-Modelle M persistiert werden. Diese Metadaten können wiederum als Grundlage für ein Referenzmodul 6 dienen, damit das Referenzmodul 6 die trainierten KI-Modelle M ausführen kann. Die Datenbank 5 kann ferner eine Versionierung für die trainierten KI-Modelle M vornehmen. Wenn z. B. ein bereits trainiertes KI-Modell M aktualisiert wird, z. B. durch das Trainingsmodul 4, wird die Version inkrementiert.

Die sechste Komponente des erfindungsgemäßen Systems 10 kann ferner ein Referenzmodul 6 bilden. Das Referenzmodul 6 ist für die Ausführung der trainierten KI-Modelle M zuständig. Die Metadaten werden von dem Kennzeichnungsmodul 3 und/oder von der Datenbank 5 bereitgestellt. Die trainierten KI-Modelle M werden in unterschiedlichen Laufzeitumgebungen MD entwickelt, getestet und/oder ausgeführt. Da die Laufzeitumgebungen MD austauschbar sind und unterschiedliche Programmierschnittstellen aufweisen können, kann das Referenzmodul 6 vorteilhafterweise eine Abstraktionsschicht für die unterschiedlichen Laufzeitumgebungen MD bilden. Das heißt, dass alle KI-Modelle M unabhängig von der Architektur oder dem Typ, über die gleiche Programmierschnittstelle des Referenzmoduls 6 ansprechbar sind. Die Benutzer des Systems 10 müssen sich nicht darum kümmern, ob und wie das KI-Modell M entwickelt und angesprochen wird. Durch das Referenzmodul 6 kann das KI-Modell M getestet werden. Wenn der Benutzer merkt, dass das KI-Modell M nicht die benötigte Genauigkeit aufweist, können zusätzlich mehr Daten B aufgezeichnet und gelabelt werden, um das gleiche KI-Modell M neu zu trainieren. Das neu trainierte Modell M kann anschließend als eine neue Version in der Datenbank 5 abgespeichert werden.

Vorteilhaftere Verwendungen des erfindungsgemäßen Systems 10 sind bspw.:
- Qualitätskontrolle von Erzeugnissen, wie z. B. für eine Porösitätskontrolle von Reifen, eine Lackfehlererkennung, eine Kontrolle von 3D-Druckerzeugnissen usw.,
- eine Vollständigkeitskontrolle, z. B. von Sequenzkörben, LKW-Ladungen usw.,
- Montagekontrolle, z. B. für die Kontrolle einer richtigen Montageposition, einer Verbindungsstelle, relativer Montagepositionen mehrerer Bauteile usw.,
- Datenanalyse, z. B. zum Auswerten von Röntgenbildern, Audiobändern, Kamera-Bildern usw.

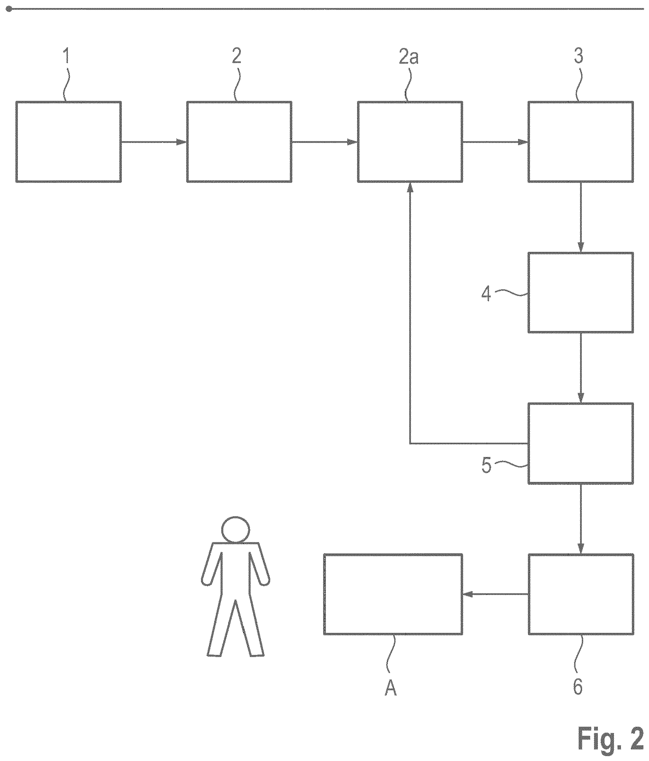

Die Figur 2 zeigt ein Verfahren im Sinne der Erfindung zum Bereitstellen von trainierten KI-Modellen M für verschiedene Anwendungen A, wie z. B. Qualitätskontrolle, Vollständigkeitskontrolle, Montagekontrolle, Datenanalyse usw., aufweisend folgende Schritte:
1) Bereitstellen eines universellen Verbindungsmoduls 1 zum elektrischen und/oder datentechnischen und/oder programmiertechnischen Verbinden von unterschiedlichen Datenquellen D an das System 10,
2) Bereitstellen eines zentralen Servicemoduls 2 zum Bereitstellen passender Treiber für die unterschiedlichen Datenquellen D,
3) Bereitstellen eines Kennzeichnungsmoduls 3 zum Bereitstellen von Eingaben in den Daten B der unterschiedlichen Datenquellen D, um die Neuronen eines KI-Modells zu bilden, und von korrespondierenden Ausgaben, um das KI-Modell zu trainieren,
4) Bereitstellen eines Trainingsmoduls 4 zum Bereitstellen von Trainingsservices zum Anlernen des KI-Modells M gemäß den Eingaben und den Ausgaben auf dem Trainingsmodul 4 oder auf einer externen IT-Infrastruktur, z. B. mithilfe eines Docker-Containers.

Weiterhin zeigt die Figur 2, dass das Verfahren im Sinne der Erfindung mindestens einen weiteren von den folgenden Schritten aufweisen kann:
5) Bereitstellen einer Datenbank 5 zum Verwalten und/oder zum Bereitstellen von trainierten KI-Modellen M und/oder
6) Bereitstellen eines Referenzmoduls 6 zum Ausführen von trainierten KI-Modellen M und/oder Bereitstellen der verschiedenen Anwendungen A mithilfe von trainierten KI-Modellen M.

Die Schritte des erfindungsgemäßen Verfahrens können bspw. in der vorgegebenen aber auch in einer abgeänderten Reihenfolge durchgeführt werden. Die Schritte des erfindungsgemäßen Verfahrens können simultan und/oder wiederholend durchgeführt werden, um einen fließenden Prozess zu ermöglichen. Das erfindungsgemäße Verfahren kann speziell zum Betreiben des erfindungsgemäßen Systems 10 dienen.

Die voranstehende Beschreibung der Figur beschreibt die vorliegende Erfindung ausschließlich im Rahmen von Beispielen. Selbstverständlich können einzelne Merkmale der Ausführungsformen, sofern es technisch sinnvoll ist, frei miteinander kombiniert werden, ohne den Rahmen der Erfindung zu verlassen.

### Bezugszeichenliste

- 10: System

- 1: Verbindungsmodul
- 2: Servicemodul
- 2a: Bedieneinheit
- 2b: Datenverarbeitungseinheit
- 2c: Speichereinheit
- 2d: Anzeigeeinheit
- 3: Kennzeichnungsmodul
- 3a: Weboberfläche
- 4: Trainingsmodul
- 5: Datenbank
- 6: Referenzmodul

- A: Anwendung
- B: Daten
- D: Datenquelle
- M: KI-Modell
- P: Projekt

- AA: Autorisierungstool
- Admin: Administrator
- App: Anwendungsschnittstelle
- LM: Überwachungstool
- MD: Laufzeitumgebung
- GUI: Benutzeroberfläche
- WS: Webservicetool
- Proxy: Portaltool

## Patentansprüche

1. System (10) zum Bereitstellen von trainierten KI-Modellen (M) für verschiedene Anwendungen (A), aufweisend folgende Komponenten:
ein Verbindungsmodul (1) zum elektrischen und/oder datentechnischen und/oder programmiertechnischen Verbinden von unterschiedlichen Datenquellen (D) an das System (10),
ein Servicemodul (2) zum Bereitstellen passender Treiber für die unterschiedlichen Datenquellen (D),
ein Kennzeichnungsmodul (3) zum Bereitstellen von Eingaben in den Daten (B) der unterschiedlichen Datenquellen (D), um die Neuronen eines KI-Modells (M) zu bilden, und von korrespondierenden Ausgaben, um das KI-Modell (M) zu trainieren,
und ein Trainingsmodul (4) zum Bereitstellen von Trainingsservices zum Anlernen des KI-Modells (M) gemäß den Eingaben und den Ausgaben auf dem Trainingsmodul (4) oder auf einer externen IT-Infrastruktur.

2. System (10) nach Anspruch 1,
**dadurch gekennzeichnet,**
**dass** eine Datenbank (5) zum Verwalten und/oder zum Bereitstellen von trainierten KI-Modellen (M) vorgesehen ist,
und/oder dass ein Referenzmodul (6) zum Ausführen von trainierten KI-Modellen (M) und/oder Bereitstellen der verschiedenen Anwendungen (A) mithilfe von trainierten KI-Modellen (M) vorgesehen ist.

3. System (10) nach einem der vorhergehenden Ansprüche,
**dadurch gekennzeichnet,**
**dass** das Verbindungsmodul (1) eine standardisierte Programmierschnittstelle für die unterschiedlichen Datenquellen (D) aufweist,
und/oder dass das Verbindungsmodul (1) einen standardisierten Stecker für die unterschiedlichen Datenquellen (D) aufweist,
und/oder dass das Verbindungsmodul (1) dazu ausgeführt ist, Kameras, Tonaufnahmegeräte, Sensoren und/oder Betriebsparametergeber als die unterschiedlichen Datenquellen (D) an das System (10) anzubinden.

4. System (10) nach einem der vorhergehenden Ansprüche,
**dadurch gekennzeichnet,**
**dass** das Servicemodul (2) eine Bedieneinheit (2a) aufweist, um die unterschiedlichen Datenquellen (D) anzusteuern und/oder Parameter an den unterschiedlichen Datenquellen (D) einzustellen,
und/oder dass das Servicemodul (2) eine Datenverarbeitungseinheit (2b) aufweist, um die Daten (B) der unterschiedlichen Datenquellen (D) zentral zu bearbeiten, für das Training von KI-Modellen (M) zu nutzen und/oder mithilfe von trainierten KI-Modellen (M) zu verarbeiten,
**dass** das Servicemodul (2) eine Speichereinheit (2c) aufweist, um die Daten (B) der unterschiedlichen Datenquellen (D) zu speichern und zu verwalten.

5. System (10) nach einem der vorhergehenden Ansprüche,
**dadurch gekennzeichnet,**
**dass** das Servicemodul (2) eine Anzeigeeinheit (2d) aufweist, um die unterschiedlichen Datenquellen (D) zu verwalten und/oder die Daten (B) der unterschiedlichen Datenquellen (D) in Live-Streams anzuzeigen,
und/oder dass das Servicemodul (2) mehrere Anwendungsschnittstellen (App) aufweist, um die verschiedenen Anwendungen (A) an einen Benutzer bereitzustellen, und/oder dass das Servicemodul (2) ein Erkennungstool für Personen aufweist, um die Personen in Daten (B) der unterschiedlichen Datenquellen (D) zu anonymisieren.

6. System (10) nach einem der vorhergehenden Ansprüche,
**dadurch gekennzeichnet,**
**dass** das Servicemodul (2) ein Protokollierungs- und/oder Überwachungstool (LM) für die Bedienbefehle eines Benutzers und/oder ein Authentifizierungs- und/oder Autorisierungstool (AA) für die Authentifizierung und/oder Autorisierung eines Benutzers und/oder ein Portaltool (Proxy) für die Weiterleitung der Bedienbefehle eines Benutzers an einen entsprechenden Dienst oder an eine entsprechende Komponente des Systems (10) aufweist,
und/oder dass das Servicemodul (2) eine Eingabeschnittstelle aufweist, um ein Intervall einzustellen, in welchem die unterschiedlichen Datenquellen (D) die Daten (B) erfasst werden können.

7. System (10) nach einem der vorhergehenden Ansprüche,
**dadurch gekennzeichnet,**
**dass** das Kennzeichnungsmodul (3) dazu ausgeführt ist, die Eingaben in den Daten (B) der unterschiedlichen Datenquellen (D), um die Neuronen eines KI-Modells (M) zu bilden, und die korrespondierenden Ausgaben bereitzustellen, um das KI-Modell (M) nach einem Überwachtes-Lernen-Verfahren zu trainieren,
und/oder dass das Kennzeichnungsmodul (3) eine Weboberfläche (3a) aufweist, um die Eingaben und die korrespondierenden Ausgaben in den Daten (B) der unterschiedlichen Datenquellen (D) manuell durch einen Benutzer und/oder automatisch durch ein bereits durch das System (10) trainiertes KI-Modell (M) bereitzustellen.

8. System (10) nach einem der vorhergehenden Ansprüche,
**dadurch gekennzeichnet,**
**dass** das Kennzeichnungsmodul (3) eine grafische Benutzeroberfläche (GUI) aufweist, um einem Benutzer mit Hilfe eines Webbrowsers eine Eingabemöglichkeit für die Eingaben und die korrespondierenden Ausgaben in den Daten (B) der unterschiedlichen Datenquellen (D) zur Verfügung zu stellen,
und/oder das Kennzeichnungsmodul (3) ein Webservicetool (WS) aufweist, um einem bereits durch das System (10) trainierten KI-Modell eine Eingabemöglichkeit für die Eingaben und die korrespondierenden Ausgaben in den Daten (B) der unterschiedlichen Datenquellen (D) zur Verfügung zu stellen.

9. System (10) nach einem der vorhergehenden Ansprüche,
**dadurch gekennzeichnet,**
**dass** das Kennzeichnungsmodul (3) mit einer Bedieneinheit (2a) und/oder einer Anzeigeeinheit (2d) verbunden ist, um Projekte (P) für verschiedene Anwendungen (A) anzulegen und/oder zu verwalten und/oder korrespondierende Anwendungsschnittstellen (App) anzuzeigen,
und/oder dass Kennzeichnungsmodul (3) mit einer Bedieneinheit (2a) und/oder einer Anzeigeeinheit (2d) verbunden ist, um einen Status und/oder einen aktuellen Fortschritt eines Trainings anzuzeigen und/oder eine Dauer und/oder einen Startpunkt des Trainings durch einen Benutzer eingeben zu können.

10. System (10) nach einem der vorhergehenden Ansprüche,
**dadurch gekennzeichnet,**
**dass** das Trainingsmodul (4) dazu ausgeführt ist, eine Datenverbindung mit einem Docker-Container herzustellen, der im Trainingsmodul (4) oder auf der externen IT-Infrastruktur installiert ist, und/oder ein Training zu starten und/oder nach Beendigung des Trainings ein trainiertes KI-Modell (M) in eine Datenbank (5) hochzuladen.

11. System (10) nach einem der vorhergehenden Ansprüche 2 bis 10,
**dadurch gekennzeichnet,**
**dass** die Datenbank (5) die Metadaten für die KI-Modelle (M), umfassend die Eingaben und die korrespondierenden Ausgaben in den Daten (B) der unterschiedlichen Datenquellen (D), speichert und/oder an das Referenzmodul (6) bereitstellt, damit das Referenzmodul (6) die Metadaten als Referenzdaten für die KI-Modelle (M) nutzen kann, und/oder dass die Datenbank (5) die trainierten KI-Modelle (M) versioniert und/oder aktualisiert,
und/oder dass die Datenbank (5) mit einer Bedieneinheit (2a) und/oder einer Anzeigeeinheit (2d) verbunden ist, um die trainierten KI-Modelle (M) anzuzeigen und/oder neue KI-Modelle (M) anzulegen.

12. System (10) nach einem der vorhergehenden Ansprüche,
**dadurch gekennzeichnet,**
**dass** das Referenzmodul (6) eine Abstraktionsschicht aufweist, um die KI-Modelle (M) in unterschiedlichen Laufzeitumgebungen (MD) zu entwickeln, zu testen und/oder auszuführen,
und/oder dass das Referenzmodul (6) mit einer Bedieneinheit (2a) und/oder einer Anzeigeeinheit (2d) verbunden ist, um die KI-Modelle (M) auszuwählen, zu testen, zu wechseln, zu löschen und/oder neue Versionen der KI-Modelle (M) auszuwählen und/oder abzuspeichern.

13. Verwendung des Systems (10) nach einem der vorhergehenden Ansprüche für eine Qualitätskontrolle von Erzeugnissen, wie z. B. für eine Porösitätskontrolle von Reifen, eine Lackfehlererkennung, eine Kontrolle von 3D-Druckerzeugnissen usw., für eine Vollständigkeitskontrolle, z. B. von Sequenzkörben, LKW-Ladungen usw., für eine Montagekontrolle, z. B. für eine Kontrolle einer richtigen Montageposition, einer Verbindungsstelle, relativer Montagepositionen mehrerer Bauteile usw., und/oder für eine Datenanalyse, z. B. zum Auswerten von Röntgenbildern, Audiobändern, Kamera-Bildern usw.

14. Verfahren zum Bereitstellen von trainierten KI-Modellen (M) für verschiedene Anwendungen (A), wie z. B. Qualitätskontrolle, Vollständigkeitskontrolle, Montagekontrolle, Datenanalyse usw., aufweisend folgende Schritte:
- Bereitstellen eines universellen Verbindungsmoduls (1) zum elektrischen und/oder datentechnischen und/oder programmiertechnischen Verbinden von unterschiedlichen Datenquellen (D) an das System (10),
- Bereitstellen eines zentralen Servicemoduls (2) zum Bereitstellen passender Treiber für die unterschiedlichen Datenquellen (D),
- Bereitstellen eines Kennzeichnungsmoduls (3) zum Bereitstellen von Eingaben in den Daten (B) der unterschiedlichen Datenquellen (D), um die Neuronen eines KI-Modells (M) zu bilden, und von korrespondierenden Ausgaben, um das KI-Modell (M) zu trainieren,
- Bereitstellen eines Trainingsmoduls (4) zum Bereitstellen von Trainingsservices zum Anlernen des KI-Modells (M) gemäß den Eingaben und den Ausgaben auf dem Trainingsmodul (4) oder auf einer externen IT-Infrastruktur.

15. Verfahren nach dem vorhergehenden Anspruch,
**dadurch gekennzeichnet,**
**dass** das Verfahren mindestens einen weiteren von den folgenden Schritten aufweist:
- Bereitstellen einer Datenbank (5) zum Verwalten und/oder zum Bereitstellen von trainierten KI-Modellen (M) und/oder
- Bereitstellen eines Referenzmoduls (6) zum Ausführen von trainierten KI-Modellen (M) und/oder Bereitstellen der verschiedenen Anwendungen (A) mithilfe von trainierten KI-Modellen (M).
